# EUROPEAN PATENT APPLICATION

(11) **EP 2 099 167 A1**
(43) Date of publication of application: **09.09.2009**
(21) Application number: 08783831.4
(22) Date of filing: 31.07.2008
(51) Int. Cl.: H04L 12/437

(54) **A METHOD AND DEVICE FOR NETWORK PROTECTION**

(30) Priority: 08.08.2007 CN 200710075712
(71) Applicant: Huawei Technologies Co., Ltd., Longgang District Shenzhen 518129 (CN)
(72) Inventor: DENG, Zhusheng, Guangdong 518129 (CN); PU, Yun, Guangdong 518129 (CN)
(74) Representative: Epping - Hermann - Fischer
(86) International application number: PCT/CN2008/071838
(87) International publication number: WO 2009/018760

(57) **Abstract**

A method and a device of network protection are disclosed to protect transmission of the PBT service when a link or node fails in the PBT network. The method comprises: switching a Provider Backbone Transport (PBT) service impacted by a fault to a protection Provider Backbone Bridge (PBB) service according to a preconfigured corresponding relation between the PBT service and the protection PBB service when a working link or a working node fails in a ring network; and forwarding a service frame of the protection PBB service in a PBB service forwarding mode. A network device for implementing such a method is also disclosed. The technical solution under the present invention enables simultaneous transmission of both the PBT service and the PBB service in the same network, requires use of only one protection technology, and draws upon the traditional Ethernet protection technology to protect the PBT service.

## Description

### FIELD OF THE INVENTION

The present invention relates to the communication field, and in particular, to a method and a device of network protection.

### BACKGROUND

Carrier-class Ethernet is a hot technology of the Service Provider (SP) network currently. The Provider Backbone Bridge (PBB) is still attributable to traditional Ethernet forwarding technologies. It is characterized by address learning, spanning tree, and flooding mechanism of the traditional Ethernet. The PBB uses a Media Access Control (MAC) address of the SP to encapsulate the Ethernet service frame of the user, namely, MAC in MAC. Therefore, the MAC addresses of the users are isolated in the PBB network, and the addressing and forwarding are performed through the MAC address of the SP. In a PBB network, if a service frame of the user is encapsulated again by the SP MAC address and is forwarded according to the SP MAC address, the forwarding domain is called a MACinMAC domain (also known as SP backbone bridge network domain). In a MACinMAC domain, the node at the edge of the domain is Backbone Edge Bridge (BEB), and the remaining nodes are Backbone Core Bridges (BCBs). The BCB forwards the service frame according to the MAC address and Virtual Local Area Network (VLAN) ID of the BEB.

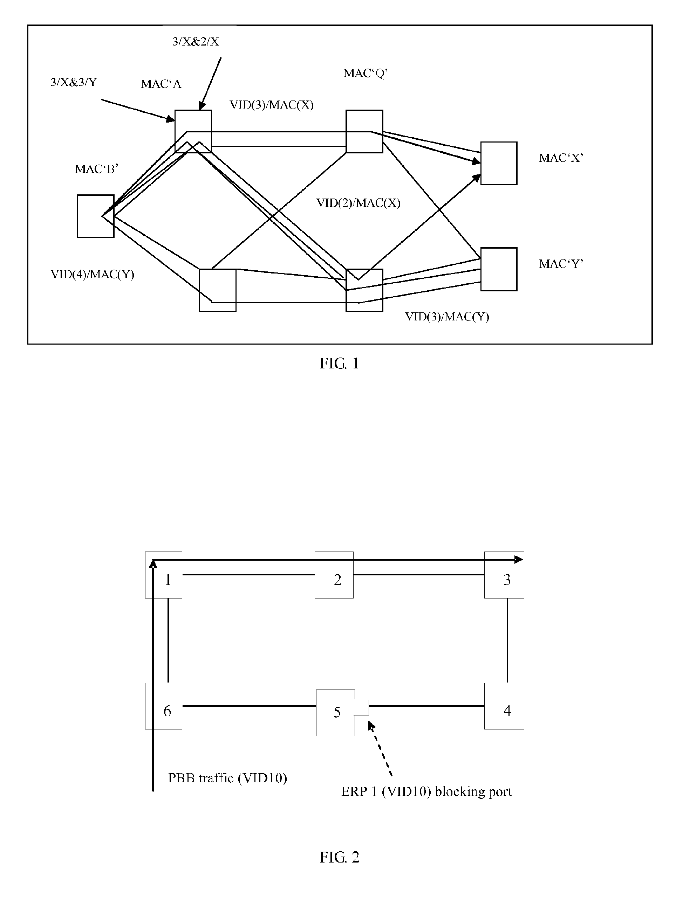

The Provider Backbone Transport (PBT) is another carrier-class Ethernet solution put forward by Nortel and BT. Unlike the traditional Ethernet, the PBT is a connection-oriented technology. As against the traditional Ethernet, the PBT removes the address learning, spanning tree and the flooding mechanism, but uses a management plane or control plane to deliver a forwarding table and set up a path. That is, the connection is already set up before the service is activated. FIG. 1 shows connection of a PBT service ring network. As shown in FIG. 1, the PBT service transmission is characterized by:
PBT path identification mode: In the PBT, Destination Address MAC (DA MAC) and Virtual Local Area Network Identifier (VID) are applied to identify a unidirectional connection. That is, DA MAC and VID are used to identify a unidirectional connection. As shown in FIG. 1, the B->Y connection is identified by VID(3)+MAC(Y). In the PBT, the traditional VLAN never exists, and the VID is one of the parameters for identifying the path directed to a destination MAC address.
PBT forwarding rule: In the PBT, the forwarding of the service frame is based on the DA MAC+VID in the frame, and each PBT service corresponds to a working path, namely, Ethernet Switched Path (ESP). Each ESP is identified by an ESP label, for example, by DA MAC+VID. Meanwhile, without the address learning and the flooding mechanism, the packets whose destination address is an unknown address or broadcast address will be discarded.
Setup of a PBT connection: Before the service is activated, a forwarding table is delivered to each network bridge through the management plane or the control plane, and is no longer generated through the traditional spanning tree protocol or address learning mechanism. In the PBT, the spanning tree protocol and the address learning mechanism are abandoned.

The PBT ring network obtains the connection monitoring capability through a connection fault management message. A Connection Checkout (CC) session is set up on two paths. The nodes at both sides of a link or node send CC frames to the peer at configurable intervals, and monitor whether a response is received. If three continuous CC messages fail to arrive, the link or node is regarded as faulty, and a fault announcement is sent to other nodes in the ring network. When the PBT ring network fails, the ESP that passes through the fault point is interrupted.

Besides, the traditional Ethernet services such as PBB service may be protected through the Ethernet Ring Protection (ERP) technology. The special network topology of a ring network facilitates implementation of simple and fast network protection. One or more ERP instances exist on an Ethernet ring. One ERP instance protects traffic of one or more VLANs. The traffic of each VLAN has a unique VID. FIG. 2 shows an ERP instance. The ERP instance is ERP1, and protects the traffic whose VID is VID10. As shown in FIG. 2, in order to protect the traffic whose VID is VID 10, the right port of node 5 blocks the VID10 traffic in normal states, thus avoiding loops (the node ports in a ring network include user ports and ring ports: a user port is adapted to access or send a service frame; and ring ports include a left port and a right port, both being connected on the ring). Therefore, the right port of node 5 is also known as a blocking port. The link from a blocking port to the next node is a Ring Protection Link (RPL). When the working link or node fails, the service is switched to the RPL, and transmitted along the ring continuously, thus protecting the traffic.

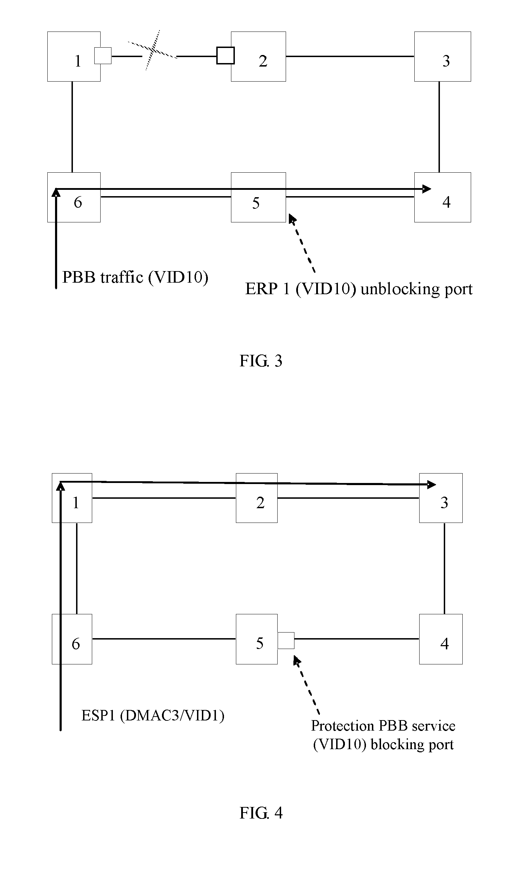

Therefore, for an ERP instance, when the Ethernet ring is normal, the protected VLAN traffic may be transmitted on all links except the RPL along the ring. That is, normally, the RPL does not transmit traffic. Generally, the RPL configures a ring port of a specified ring node as a blocking port to accomplish that purpose. As shown in FIG. 3, when the network fails, for example, when the link between node 1 and node 2 fails, the original blocking port on node 5 is unblocked, traffic whose VID is VID10 is allowed to pass through the blocking port, and the RPL is available for transmitting traffic along the ring.

In the process of developing the present invention, the inventor finds at least these defects in the prior art: When both PBB and PBT services coexist in the Ethernet ring, it is difficult to recover the Ethernet ring from the fault; the PBB service protection may be implemented through the traditional Ethernet protection technology, but no special protection mechanism is available to implement the protection of the PBT service, and it is difficult to transmit services correctly when a fault occurs in the ring network.

### SUMMARY

A method and a device of network protection are disclosed in an embodiment of the present invention to overcome the problem that the ESP passing through the faulty node is interrupted when a fault occurs in the PBT network.

A network protection method is disclosed in an embodiment of the present invention. The method includes:
switching a PBT service impacted by a fault to a protection PBB service according to a preconfigured corresponding relation between the PBT service and the protection PBB service when a working link or a working node fails in a network; and
forwarding service frames of the protection PBB service in the PBB service forwarding mode.

A network device is disclosed in an embodiment of the present invention. The network device includes:
a protection switching unit 101, adapted to switch a PBT service impacted by a fault to a protection PBB service according to a preconfigured corresponding relation between the PBT service and the protection PBB service when a working link or a working node fails in a network; and
a service forwarding unit 102, adapted to forward a service frame of the protection PBB service in the PBB service forwarding mode.

In the network protection solution under the present invention, when both a PBB service and a PBT service are transmitted in the network simultaneously, if a link or a node in the PBT network fails, the network transmits the PBT service through the protection PBB service. Moreover, the protection technology of the PBT network draws upon the traditional Ethernet protection technology, and protects the PBT service when the same network supports transmission of both the PBT service and the PBB service.

### BRIEF DESCRIPTION OF THE DRAWINGS

FIG. 1 shows connection of a PBT service ring network;

FIG. 2 shows an instance of traditional Ethernet ring protection used by a PBB service;

FIG. 3 shows protection switching that occurs when a PBB service fails;

FIG. 4 shows coexistence of a PBB service and a PBT service in an Ethernet ring network in an embodiment of the present invention;

FIG. 5 shows a network in which the ring node is a BEB in an embodiment of the present invention;

FIG. 6 shows a network in which the ring node is a BCB in an embodiment of the present invention;

FIG. 7 shows protection switching in which the protection switching point is a first fault neighbor node when the ring node is a BCB in an embodiment of the present invention;

FIG. 8 shows protection switching in which the protection switching point is a service ingress ring node when the ring node is a BCB in another embodiment of the present invention;

FIG. 9 shows protection switching in which the ring node is a BCB in an embodiment of the present invention;

FIG. 10 shows that a protection PBB service is switched from a service egress ring node back to the corresponding PBT service in another embodiment of the present invention;

FIG. 11 shows that a protection PBB service is switched from a second fault neighbor node back to the corresponding PBT service in another embodiment of the present invention;

FIG. 12 shows a network device for PBT service protection in an embodiment of the present invention;

FIG. 13 shows service transmission when a PBT Fast ReRouting (FRR) protection network is normal in an embodiment of the present invention; and

FIG. 14 shows service protection switching when a PBT FRR protection network fails in an embodiment of the present invention.

### DETAILED DESCRIPTION

According to the embodiments of the present invention, the PBT service is switched to a PBB service when a link or a node fails in the network, and the service is transmitted in the PBB service forwarding mode, and thus, the PBT service is transmitted to the destination node successfully and failure of transmitting the PBT service in the case of network fault can be avoided.

The networks in the present invention include a ring network and a mesh network. The following description takes a ring network as an example.

When both a PBB service and a PBT service are transmitted simultaneously in a ring network, the switching between the two services is implemented by changing the VID or the Ethernet service frame type (Ethertype) field. Ethertype is a field in the Ethernet frame, which is used to identify the frame type.

If the switching between the two services is performed through the VID, because the VID in the ring network is preconfigured, the VID may distinguish the PBT service from the PBB service. That is, the value range of the VID is planned, one section is for the PBT service, and other sections are for the PBB service. For example, the values within 1-2000 represent the PBT service, and other values represent the PBB service. One service may be switched to the other service by changing the VID of one service to the VID of the other service.

If the switching is performed through the Ethertype field, the PBB service and the PBT service are identified by different Ethertype values. For example, Ethertype=X represents the PBT service, and Ethertype=Y represents the PBB service. Therefore, one service may be switched to the other service by changing the Ethertype.

Therefore, before the service is activated, the corresponding relation between the VID of the PBT working path (ESP) and the VID of the protection PBB service is preconfigured. Those skilled in the art may configure the corresponding relation according to the actual network application, for example, create a corresponding table between the VID of the PBT service and the VID of the protection PBB service. In FIG. 4, ESP1 (whose VID is VID1) is protected through ERP1 which is a PBB protection instance whose VID is VID10. Meanwhile, the protection corresponding relation is stored in the node vulnerable to protection switching.

After the corresponding relation between the VID of the PBT working path (ESP) and the VID of the protection PBB service is configured, the VLAN attribute used by the protection PBB service is configured on the node traversed by the service so as to enable the protection PBB service to pass.

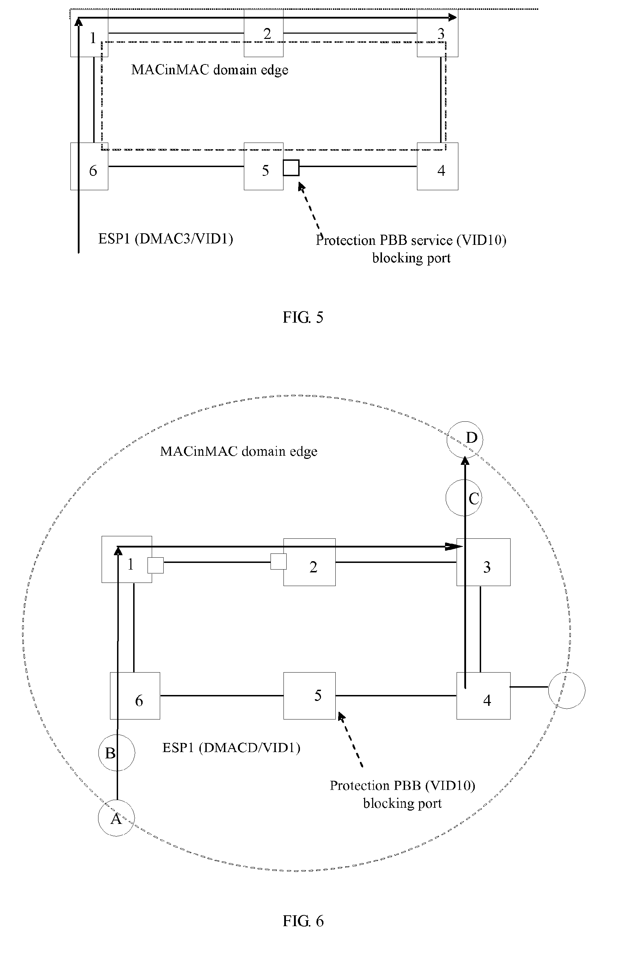

When the ring node of the PBT ring network is a BEB, the VLAN attribute used by the protection PBB needs to be configured only on the left ring port and the right ring port of each ring node, without the need of configuring the subscriber port of the ring node. As shown in FIG. 5, the PBT service working path (ESP1) from node 6 to node 3 is on the ring, and is represented by DMAC3+VID1. Its corresponding PBB protection instance (ERP1) is a PBB service identified by VID10. Therefore, the VLAN attribute indicated by VID10 needs only to be configured on the ring port of each ring node.

When the ring node of the PBT ring network is a BCB, the BEB is located outside of the ring. Because the ring node is a BCB, the ring node forwards the PBT service frame according to the MAC address and VID of the BEB. The VLAN attribute used by the protection PBB service of the PBT needs to be configured not only on the left ring port and the right ring port of each ring node, but also on all ports of the nodes between the egress ring node of the service and the destination node of the service. As shown in FIG. 6, node A and node D are BEBs; the PBT service working path from node A to node D is ESP1, represented by DMACD+VID1; and its corresponding PBB protection instance ERR1 is a PBB service identified by VID10. The VLAN attribute indicated by VID10 needs to be configured not only on the left ring port and the right ring port of each ring node, but also on the ports traversed by all services between the egress ring node 3 of the service and the destination node D of the service.

When the ring network is detected as faulty, for example, when the link between node 1 and node 2 fails, as regards the PBB service, the protection instance ERR1 performs protection operation according to the traditional Ethernet protection technology. That is, the original blocking port on node 5 is unblocked, and the PBB service identified by VID10 is allowed to pass through this port. For the PBT service, two protection modes are available: steering protection and wrapping protection.

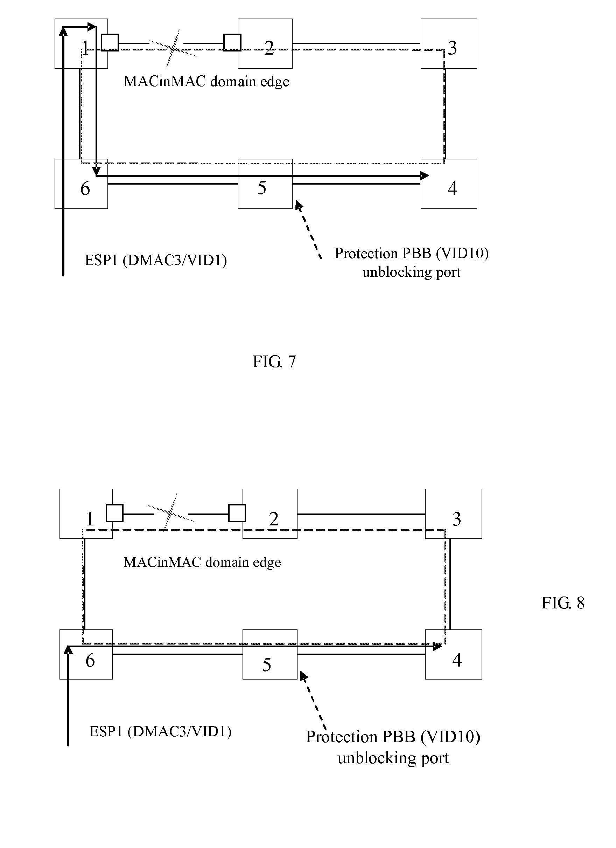

In an embodiment of the present invention, the PBT service is protected in the wrapping mode. In the wrapping mode, the protection switching point is the first fault neighbor node, as shown in FIG. 7. The ring node of the PBT ring network is a BEB, all the nodes on the working path are on the ring network. In FIG. 7, the destination node is node 3, which is also on the ring. Because the service arrives at node 1 first and node 1 detects that the link connected to the next-hop node fails, the protection switching occurs on node 1. According to the preconfigured corresponding relation between the PBT service and the protection PBB service, node 1 uses the Ethernet switching path label used by the PBT service, namely, the Ethernet switching path label corresponding to the working path (ESP) of the PBT service. For example, if the Ethernet switching path label is combined of the destination address of the service frame of the PBT service, the VID, the service ingress port, and the source address, and the PBT service identified by VID1 is switched to the PBB service identified by VID10. The destination MAC address of the service frame remains unchanged (still DMAC3) but the VID changes from VID1 to VID10. Besides, depending on the implementation mode, the Ethernet switching path label may be combined of the destination address of the service frame of the PBT service, VID, and the service ingress port; or combined of the destination address of the service frame of the PBT service, VID, and the source address; or combined of the destination address of the service frame of the PBT service and the VID. In this way, the PBT service may be switched to the protection PBB service in different modes, depending on the form of the Ethernet switching path label. The protection scope of the present invention covers any method that uses an Ethernet switching path label for switching.

Afterward, the ring node may disable the address learning function, and it does not search the forwarding table, but transmits the PBB protection service along the ring by solely relying on the configured VLAN attribute. Alternatively, the ring node does not disable the address learning function, but transmits the PBB protection service by searching the forwarding table and flooding. The address learning function and the flooding function are covered by the prior art, and are not detailed here any further.

When the service frame arrives at node 3, according to the PBB forwarding rule, node 3 compares and determines that its MAC address is the same as the destination MAC address of the service frame, which indicates that the destination node of the service frame is node 3. Therefore, the node 3 terminates transmission of the service frame on the ring.

In another embodiment of the present invention, the PBT service is protected in the steering mode. In the steering mode, the protection switching point is the ingress ring node. Each ring node maintains a ring topology view. When a fault occurs, the fault announcement carries a fault location message. According to the topology view and the fault location message, each ring node judges whether the ESP which uses the ring node as an ingress ring node is affected by the fault. If the ESP is affected, protection switching occurs. Nevertheless, protection switching may occur no matter whether the ESP is affected by the fault. As shown in FIG. 8, the ring node of the PBT ring network is a BEB, and both the ingress ring node (node 6) and the destination node (node 3) are on the ring network. Therefore, protection switching occurs on node 6. According to the preconfigured corresponding relation between the PBT service and the protection PBB service, node 6 switches the PBT service identified by VID1 to the PBB service identified by VID10. The destination MAC of the service frame remains unchanged (still DMAC3), but the VID changes from VID1 to VID10. The ring node may disable the address learning function, and it does not search the forwarding table, but transmits the PBB protection service along the ring by solely relying on the configured VLAN attribute. Alternatively, the ring node does not disable the address learning function, but transmits the PBB protection service by searching the forwarding table and flooding.

When the service frame arrives at node 3, still according to the PBB forwarding rule, node 3 compares and determines that its MAC address is the same as the destination MAC address of the service frame, which indicates that the service frame has arrived at the destination. Therefore, the transmission of the service frame on the ring is terminated.

In the foregoing embodiment, the ring node of the PBT ring network is a BEB, and the PBB service forwarding mode is applied to transmit the service frame of the protection PBB service to the destination node (on the ring).

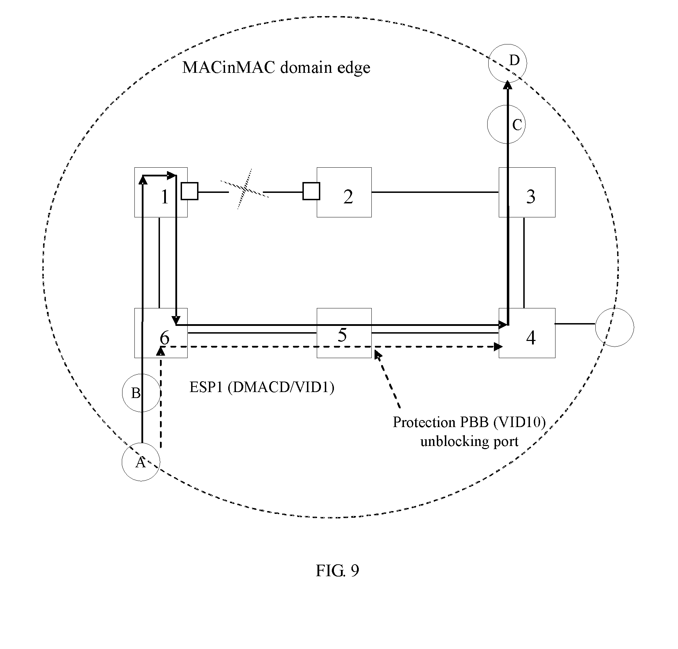

When the ring node of the PBT ring network is a BCB, as shown in FIG. 9, the wrapping protection mode (indicated by a solid line) or steering protection mode (indicated by a dotted line) are still applicable, and the PBT service affected by the fault is switched to the protection PBB service and transmitted along the ring. Differently, as shown in FIG. 9, when the service frame of the protection PBB service arrives at the egress ring node C, node 3 compares and finds that its MAC address is different from the destination MAC address of the service frame. Therefore, lower ring operation is performed. All nodes (except the egress ring node C) between the egress ring node C and the destination node D transmit the PBB protection service through the address learning function by searching the forwarding table and flooding. The service frame (whose VID is VID10) of the protection PBB service is transmitted to the destination node D of the service in the PBB service forwarding mode.

In all the embodiments described above, no matter whether the protection mode is wrapping or steering, no matter whether ring node of the PBT ring network is BEB or BCB, when a fault occurs in the ring network, the PBT service is switched to the PBB service for transmitting, and the service frame of the PBB service is transmitted continuously to the destination node in the PBB service forwarding mode.

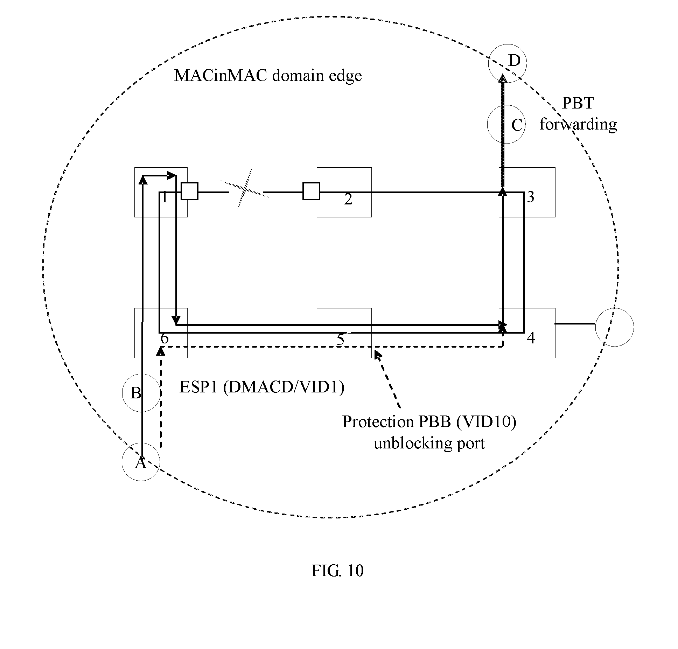

In another embodiment of the present invention, if the ring node is a BCB, namely, if the BEB is located outside of the ring network, when a fault occurs on the ring network, the PBT service is switched to the corresponding protection PBB service first according to the preconfigured corresponding relation between the PBT service and the protection PBB service, as shown in FIG. 10. If the service is transmitted in the wrapping mode, the switching point is the first fault neighbor node (indicated by a solid line); and, if the service is transmitted in the steering mode, the switching point is an ingress ring node (indicated by a dotted line) of the service. After the PBT service is switched to the PBB service, the protection PBB service is transmitted along the ring in the PBB forwarding mode.

When the protection PBB service arrives at the egress ring node or the second fault neighbor node, the PBB service is switched back to the PBT service. On the working path of the PBT service, the service frame is transmitted continuously to the destination node in the PBT service forwarding mode.

When the node that switches the PBB service back to the PBT service is an egress ring node of the original PBT service, namely, when the PBB protection service frame is transmitted to the egress ring node, the protection PBB service is switched back to the original PBT service. In this case, it is necessary to configure lower ring filtering entries at the egress ring node before the service is activated. As shown in FIG. 10, lower ring filtering entries are configured on the egress ring node 3 beforehand. That is, the service frames whose VID is VID10 and whose MAC address is DMACD are filtered out, and are no longer transmitted on the ring, but are operated off the ring. According to the preconfigured corresponding relation between the PBT service and the protection PBB service, the PBT service identified by VID1 is protected by the PBB service identified by VID10. Node 3 finds that the service frame matches the configured filtering entry, and filters out the PBB service frame. Node 3 does not discard this frame directly, but further searches for the preconfigured corresponding relation between the PBT service and the protection PBB service. If node 3 finds that the working path (ESP) of the PBT service corresponding to the protection PBB service is ESP1 (for example, a label denoted by DMACD+VID1), node 3 switches the PBB protection service back to the ESP1. That is, the destination address DMAC of the Ethernet frame remains unchanged (still DMACD), but the VID changes from VID10 to VID1. Afterward, the service is transmitted from ESP1 to the destination node.

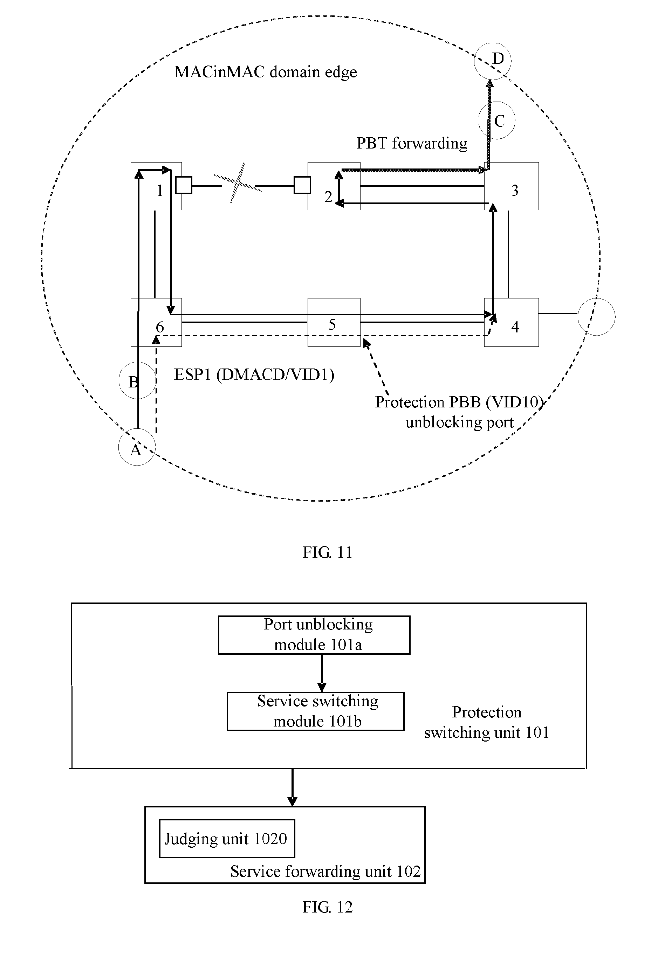

When the node that switches the PBB service back to the PBT service is the second fault neighbor node, namely, when the PBB protection service frame is transmitted continuously to the second fault neighbor node in the PBB service forwarding mode, the protection PBB service does not dropped from the ring, but is transmitted to the second fault neighbor node directly because no filtering entry is configured and no VLAN attribute for the PBB service is configured at the subscriber port between the egress ring node and the destination node of the service either. In this case, the second fault neighbor node switches the protection PBB service back to the original PBT service, as shown in FIG. 11. When a fault occurs in the network, according to the preconfigured corresponding relation between the PBT service and the protection PBB service, the first fault neighbor node 1 (indicated by a sold line) or the ingress ring node 6 (indicated by a dotted line) of the service switches the PBT service identified by VID1 to the protection PBB service identified by VID10. That is, the destination address DMAC of the Ethernet service frame remains unchanged (still DMACD), but the VID changes from VID1 to VID10. Afterward, the service frame of the protection PBB service is transmitted to the second fault neighbor node 2 in the PBB service forwarding mode. According to the preconfigured corresponding relation between the PBT service and the protection PBB service, node 2 switches the protection PBT service to the corresponding PBB service. Its corresponding working path (ESP) is ESP1 (for example, identified by a DMACD+VID1 label). That is, the destination MAC of the service frame remains unchanged (still DMACD), but the VID changes from VID 10 to VID1. Afterward, the service frame of the PBT service is transmitted from ESP1 to the destination node.

In another embodiment of the present invention, after the service type in the ring network is identified as a PBT service through a frame type field (Ethertype), the destination MAC address and the VID of the PBT service frame affected by the fault remain unchanged, and only the frame type field in the service frame needs to be changed. That is, Ethertype=X changes to Ethertype=Y. In this way, the PBT service is switched to the protection PBB service. In this case, the switching node is the first fault neighbor node or the ingress ring node of the service frame. Afterward, the protection PBB service frame is transmitted in the PBB forwarding mode until the frame arrives at the destination node.

Alternatively, the protection PBB service may be switched back to the PBT service when the PBB service frame arrives at the second fault neighbor node or the egress ring node of the service frame, and then the PBT service frame is forwarded in the PBT service forwarding mode until the PBT service frame arrives at the destination node.

As shown in FIG. 12, a network device is disclosed in an embodiment of the present invention. The network device includes:
a protection switching unit 101, adapted to switch a PBT service impacted by a fault to a protection PBB service according to a preconfigured corresponding relation between the PBT service and the protection PBB service when a working link or a working node fails in a ring network.

The preconfigured corresponding relation between the PBT service and the protection PBB service is the corresponding relation between the Ethernet switching path label used by the PBT service and the VID used by the PBB service.

Depending on the implementation mode, the Ethernet switching path label used by the PBT service may be combined of the destination address of the service frame of the PBT service, VID, service ingress port, and the source address; or combined of the destination address, VID, and the service ingress port; or combined of the destination address, VID, and source address; or combined of the destination address and the VID.

Accordingly, the corresponding relation between the Ethernet switching path label used by the PBT service and the VID used by the PBB service may be expressed in many modes, depending on the Ethernet switching path label. For example, the corresponding relation may be denoted by the VID in the Ethernet switching path label and the VID used by the PBB service; or by the destination address in the Ethernet switching path label and the VID used by the PBB service; or by the source address in the Ethernet switching path label and the VID used by the PBB service.

According to the configured corresponding relation, the ring node port in the ring network and the node port traversed by the protection PBB service store the VLAN attribute used by the protection PBB service.

The protection switching unit 101 includes:
a port unblocking module 101a, adapted to unblock the blocking port on the corresponding protection PBB service network when a working link or a working node fails in the ring network.

When a working link or a working node fails in the ring network, the blocking port corresponding to the protection PBB service instance is unblocked by the port unblocking module to let the protection PBB traffic pass.

The service switching module 101b is adapted to switch the PBT service affected by the fault to the corresponding protection PBB service.

The destination MAC address and the VID of the service frame of the PBT service affected by the fault remain unchanged, the frame type field in the service frame changes from the PBT service type to the PBB service type, and the PBT service is switched to the corresponding protection PBB service.

Alternatively, the destination MAC address of the service frame of the PBT service affected by the fault remains unchanged, and the VID in the service frame changes to the VID used by the corresponding protection PBB service.

Depending on the network configuration mode, the PBT service affected by the fault may be switched to the corresponding protection PBB service by an ingress ring node device of the PBT service (for example, in the case of steering protection mode), or by the first fault neighbor node device (for example, in the case of the wrapping protection mode).

The service forwarding unit 102 is adapted to forward service frames of the protection PBB service in the PBB service forwarding mode.

The service forwarding unit 102 further includes a judging unit 1020. When the protection PBB service arrives at the egress ring node, the judging unit judges whether the current destination MAC address is the same as the destination MAC address in the service frame of the protection PBB service. If such is the case, it indicates that the service frame has arrived at the destination node.

In the embodiments described above, no matter whether the protection mode is wrapping or steering, when a fault occurs in the ring network, the network device switches the PBT service to the PBB service for transmitting, and the service forwarding unit 102 keeps transmitting the service frame of the protection PBB service to the destination node in the PBB service forwarding mode.

In another embodiment of the present invention, when the protection PBB service arrives at the egress ring node of the service or the second fault neighbor node, the network device switches the protection PBB service back to the corresponding PBT service, as described below:

The protection switching unit 101 is further adapted to switch the protection PBB service back to the corresponding PBT service when the protection PBB service arrives at the egress ring node if the judging unit determines that the protection PBB service has not arrived at the destination node, namely, determines that the egress ring node at this time is not the destination node.

Alternatively, when the protection PBB service arrives at the second fault neighbor node, the second fault neighbor node switches the protection PBB service back to the corresponding PBT service.

After the protection PBB service is switched back to the corresponding PBT service, the service forwarding unit 102 forwards the service frame of the PBT service in the PBT service forwarding mode. Afterward, the service forwarding unit 102 keeps forwarding the service frame of the PBT service in the PBT service forwarding mode until the service frame arrives at the destination node. That is, the service frame is transmitted from the working path (ESP) corresponding to the PBT service to the destination node.

The foregoing technical solution reveals that in the PBT ring network protection solution under the present invention, when a link or a node fails in the PBT ring network, the network transmits the PBT service through a protection PBB service. In this way, the PBT service is transmitted to the destination node successfully. Moreover, the PBT ring network protection technology draws upon the traditional Ethernet protection technology, and protects the PBT service when the same network supports transmission of both the PBT service and the PBB service.

The method under the present invention is also applicable to the other network types such as a mesh network in addition to the ring network.

For protection of a mesh network, the Multi-Protocol Label Switching (MPLS) defines an FRR technology, which can protect against the fault of a single node or link.
The FRR technology bypasses the node or link which is potentially faulty, presets a protection channel at the neighboring upstream and downstream nodes of the potential fault point. When the fault occurs, the protected service is switched to the preset protection channel, thus implementing fast protection for the service.

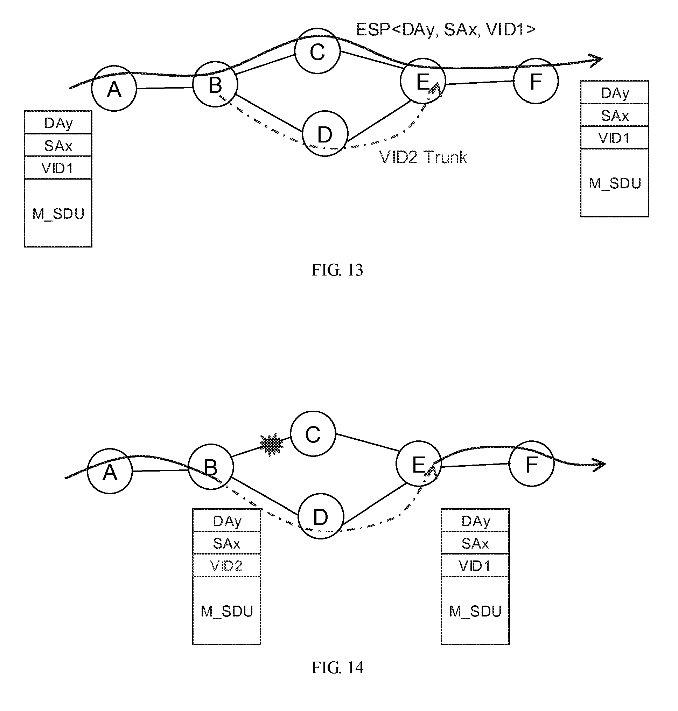

FIG. 13 shows a PBT FRR implementation mode. In order to protect the link between node B and node C in the network, a protection path may be set up between the upstream node (B) and the downstream node (E) of node C beforehand. This protection path is a PBB service identified by VID2, as indicated by the dotted line in FIG. 13. Continuity check is performed between node B and node C. When the link between node B and node C fails, node B detects the fault, and switches the PBT service to the protection PBB path identified by VID2 (by replacing the VID in the PBT service with PBB VID2). The protected service is forwarded to node E through node D, and node E recovers the protected service to a normal service (by recovering VID1 in the PBT service) and then forwards the service to node F. In this way, the FRR fast protection of the PBT service is accomplished, as shown in FIG. 14. The principles and implementation details are the same as those of the ring network, and are not elaborated here any further.

It is understandable to those skilled in the art that the network device disclosed herein is also applicable to other network types such as a mesh network. The principles and implementation details of other network types are the same as those of the ring network, and are not elaborated here any further.

Although the invention has been described through some preferred embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A network protection method, comprising:
switching a Provider Backbone Transport, PBT, service impacted by a fault to a protection Provider Backbone Bridge, PBB, service according to a preconfigured corresponding relation between the PBT service and the protection PBB service when a working link or a working node fails in a ring network; and
forwarding a service frame of the protection PBB service in a PBB service forwarding mode.

2. The method of claim 1, wherein:
the preconfigured corresponding relation between the PBT service and the protection PBB service is a corresponding relation between an Ethernet switching path label used by the PBT service and a Virtual Local Area Network Identifier, VID, used by the PBB service.

3. The method of claim 2, wherein the Ethernet switching path label comprises:
combination of: a destination address, the VID, a service ingress port, and a source address of the service frame of the PBT service; or
combination of: the destination address, the VID, and the service ingress port of the service frame of the PBT service; or
combination of: the destination address, the VID, and the source address of the service frame of the PBT service; or
combination of: the destination address and the VID of the service frame of the PBT service.

4. The method of claim 3, wherein the corresponding relation between the Ethernet switching path label used by the PBT service and the VID used by the PBB service comprises:
a corresponding relation between the VID in the Ethernet switching path label and the VID used by the PBB service; or
a corresponding relation between the destination address in the Ethernet switching path label and the VID used by the PBB service; or
a corresponding relation between the source address in the Ethernet switching path label and the VID used by the PBB service.

5. The method of claim 1, wherein: the switching from the PBT service affected by the fault to the corresponding protection PBB service comprises:
unblocking a blocking port in a corresponding protection PBB service network;
changing the VID in the service frame of the PBT service affected by the fault to the VID used by the corresponding protection PBB service, and switching the PBT service affected by the fault to the corresponding protection PBB service; or
changing a frame type field in the service frame of the PBT service affected by the fault from a PBT service type to a PBB service type, and switching the PBT service to the corresponding protection PBB service.

6. The method of claim 1, wherein:
the node which switches the PBT service affected by the fault to the corresponding protection PBB service is a first fault neighbor node or an ingress ring node of the PBT service.

7. The method according to any one of claims 1-6, further comprising:
switching the protection PBB service back to the corresponding PBT service at the second fault neighbor node or an egress ring node of the protection PBB service according to the corresponding relation, and forwarding the service frame of the PBT service to the destination node in a PBT service forwarding mode; or
keeping forwarding the service frame of the protection PBB service to the destination node in the PBB service forwarding mode.

8. The method of claim 1, wherein the forwarding of the service frame of the PBB service in the PBB service forwarding mode further comprises:
judging, by a egress ring node, whether a current Media Access Control (MAC) address is the same as a destination MAC address in the service frame of the protection PBB service when the protection PBB service arrives at the egress ring node; and, if such is the case, determining that the service frame has arrived at the destination node.

9. The method according to any one of claims 1-6 or claim 8, wherein:
the network is the ring network or a mesh network.

10. A network device, comprising:
a protection switching unit 101, adapted to switch a Provider Backbone Transport (PBT) service impacted by a fault to a protection Provider Backbone Bridge (PBB) service according to a preconfigured corresponding relation between the PBT service and the protection PBB service when a working link or a working node fails in a network; and
a service forwarding unit 102, adapted to forward a service frame of the protection PBB service in a PBB service forwarding mode.

11. The network device of claim 10, wherein the protection switching unit 101 further comprises:
a port unblocking module 101a, adapted to unblock a blocking port on a corresponding protection PBB service network when a working link or a working node fails in the network; and
a service switching module 101b, adapted to switch the PBT service affected by the fault to the protection PBB service.

12. The network device of claim 10, wherein:
the protection switching unit 101 is further adapted to: switch the protection PBB service back to the corresponding PBT service at a second fault neighbor node or a egress ring node of the protection PBB service according to the corresponding relation; and
the service forwarding unit 102 is further adapted to forward a service frame of the PBT service in a PBT service forwarding mode.

13. The network device according to any one of claims 10-12, wherein the service forwarding unit 102 further comprises:
a judging unit 1020, adapted to: judge whether a current Media Access Control, MAC, address is the same as a destination MAC address in the service frame of the protection PBB service; and, if such is the case, determine that the service frame has arrived at a destination node.
